# DEMANDE DE BREVET EUROPEEN

(11) **EP 1 385 224 A1**
(43) Date de publication de la demande: **28.01.2004**
(21) Numéro de dépôt: 03102271.8
(22) Date de dépôt: 23.07.2003
(51) Int. Cl.: H01M 8/06, H01M 8/04

(54) **Recirculation de gaz d'échappement d'un brûleur de reformeur dans un circuit d'évacuation de pile à combustible**

(30) Priorité: 26.07.2002 FR 0209552
(71) Demandeur: Renault s.a.s., 92100 Boulogne Billancourt (FR)
(72) Inventeur: ROUVEYRE, Luc, 94100, SAINT MAUR DES FOSSES (FR)
(74) Mandataire: Kohn, Philippe

(57) **Abrégé**

L'invention concerne une installation de production d'électricité (10) de véhicule automobile, comportant une pile à combustible (14), notamment à électrolyte polymère (16), et un reformeur (86) comprenant un brûleur (90), qui alimente une anode (18) de la pile (14) avec du combustible qui est partiellement consommé par la pile (14), le surplus de combustible étant conduit depuis l'anode (18) jusqu'au brûleur (90) qui en effectue la combustion et l'expulse dans une conduite d'échappement (98), et du type dans laquelle la cathode (20) de la pile (14) est alimentée en comburant compressé par au moins un compresseur (66,68), et dans laquelle le surplus de comburant est évacué dans une tubulure d'évacuation cathodique (58) dans laquelle sont agencées au moins deux turbines (70,72) qui entraînent deux compresseurs (66,68), la conduite d'échappement (98) du brûleur (90) étant reliée à la tubulure d'évacuation cathodique (58) dans laquelle elle débouche en amont de la turbine (70,72).

## Description

L'invention concerne une installation de production d'électricité pour fournir de l'énergie à un véhicule automobile, comportant une pile à combustible.

Une pile à combustible est constituée principalement de deux électrodes, une anode et une cathode, qui sont séparées par un électrolyte. Ce type de pile permet la conversion directe en énergie électrique de l'énergie produite par les réactions d'oxydo-réduction suivantes :
- une réaction d'oxydation d'un combustible, ou carburant, qui alimente l'anode en continu ; et
- une réaction de réduction d'un comburant qui alimente la cathode en continu.

Les piles à combustible utilisées pour fournir de l'énergie électrique à bord de véhicules automobiles sont généralement du type à électrolyte solide, notamment à électrolyte en polymère. Une telle pile utilise notamment de l'hydrogène (H₂) et de l'oxygène (O₂) en guise de combustible et de comburant respectivement.

Ce type de pile permet d'obtenir à la fois un rendement, un temps de réaction et une température de fonctionnement satisfaisants pour fournir de l'électricité à un moteur électrique pour la propulsion d'un véhicule automobile.

Contrairement aux moteurs thermiques qui rejettent avec les gaz d'échappement une quantité non négligeable de substances polluantes, la pile à combustible offre notamment l'avantage de ne rejeter que de l'eau qui est produite par la réaction de réduction à la cathode. De plus, une pile du type décrit précédemment peut utiliser de l'air ambiant dont l'oxygène (O₂) est réduit.

L'invention concerne plus particulièrement une installation de production d'électricité pour fournir de l'énergie à un véhicule automobile, comportant une pile à combustible, notamment à électrolyte polymère, et un reformeur comprenant un brûleur, qui alimente une entrée anodique de la pile avec un reformât contenant du combustible, notamment de l'hydrogène, qui est partiellement consommé par la pile, le surplus de reformât étant conduit depuis une sortie anodique de la pile jusqu'à une entrée d'alimentation du brûleur qui effectue la combustion du surplus de reformât et l'expulse, sous forme de gaz d'échappement, dans une conduite d'échappement, et du type dans laquelle une tubulure d'alimentation cathodique alimente une entrée cathodique de la pile en comburant, notamment en air, compressé par au moins un compresseur, et dans laquelle une sortie cathodique de la pile évacue le surplus de comburant dans une tubulure d'évacuation cathodique dans laquelle est agencée au moins une turbine qui est reliée mécaniquement au compresseur, la conduite d'échappement du brûleur étant reliée à la tubulure d'évacuation cathodique dans laquelle elle débouche en amont de la turbine.

La cathode comporte généralement une entrée qui permet l'alimentation continue en oxygène (O₂) ou en air, et une sortie qui permet l'évacuation du surplus d'air ou d'oxygène (O₂) ainsi que l'eau produite lors de la réduction de l'oxygène (O₂). Lorsque la pile fonctionne dans un mode dit « impasse », l'anode comporte généralement une entrée par laquelle est introduit de l'hydrogène pur (H₂) qui est entièrement oxydé.

Cependant, dans l'état actuel de la technique, le stockage d'hydrogène pur (H₂) à bord du véhicule nécessite un volume trop important pour obtenir une autonomie confortable. De plus, la logistique de distribution de l'hydrogène (H₂) n'est pas encore répandue géographiquement.

Pour résoudre ces problèmes, il est connu de produire de l'hydrogène (H₂) directement à bord du véhicule à partir d'hydrocarbures, notamment de combustibles conventionnels tels que l'essence ou le gaz naturel. L'hydrogène (H₂) est extrait de l'essence lors d'une opération dite de reformage qui nécessite un dispositif appelé reformeur.

L'essence est injectée dans le reformeur avec de l'eau et de l'air. Le produit du reformage est un gaz appelé reformât qui est principalement composé d'hydrogène (H₂), de monoxyde de carbone (CO), de dioxyde de carbone (CO₂), d'oxygène (O₂) et d'azote (N₂). Le reformeur comporte généralement un brûleur qui fournit l'énergie calorifique nécessaire pour maintenir le reformeur à une température de fonctionnement.

L'anode de la pile est alors directement alimentée en reformât. Dans ce mode de fonctionnement, le combustible qui alimente l'anode n'est donc plus de l'hydrogène pur (H₂). Il est alors nécessaire d'évacuer les gaz qui n'interviennent pas dans les réactions d'oxydo-réduction. L'anode comporte donc une sortie d'évacuation du surplus de gaz. Les gaz évacués de l'anode comportent des substances polluantes et de l'hydrogène (H₂) non consommé, par exemple entre 5% et 30% de l'hydrogène (H₂) introduit dans l'anode, qui doivent être brûlés avant d'être rejetés dans l'atmosphère.

La combustion des gaz d'évacuation est avantageusement réalisée dans le brûleur du reformeur. Le produit de la combustion est ensuite rejeté dans l'atmosphère sous forme de gaz d'échappement. La pile fonctionne alors dans un mode dit « de recirculation » dans lequel le combustible introduit à l'anode circule contrairement au mode « impasse » dans lequel le combustible stagne à l'anode.

Pour améliorer le rendement de la pile, le combustible et le comburant sont avantageusement comprimés par au moins un compresseur, par exemple entre 2 et 4,5 bars. L'énergie d'entraînement du compresseur est généralement fournie par un moteur électrique et, souvent, par une turbine alimentée par les gaz d'évacuation de la cathode.

Cependant, le moteur d'entraînement du compresseur consomme l'énergie électrique fournie par la pile, ce qui diminue l'énergie utile fournie par la pile au véhicule.

Il faut aussi veiller à ce que la pression de combustible à l'anode soit sensiblement la même que la pression du comburant à la cathode. Si la différence entre les deux pressions est supérieure à une valeur seuil, la pile risque en effet d'être endommagée.

Il est connu d'utiliser des capteurs de pression et des détendeurs ou des compresseurs pour piloter les pressions à l'anode et à la cathode. Cependant, ces dispositifs sont coûteux.

On connaît aussi des installations de production d'électricité du type dans lequel le compresseur est relié mécaniquement à une turbine qui est agencée dans la conduite d'échappement du brûleur. Une telle installation est par exemple décrite dans le document EP-A-0.924.786. Ainsi l'énergie contenue dans les gaz d'échappement du brûleur est utilisée pour entraîner le compresseur d'air. De plus, le fait de raccorder le circuit d'évacuation anodique sur le circuit d'évacuation cathodique permet d'équilibrer sensiblement les pressions des gaz à l'anode et à la cathode de la pile à combustible.

Cependant le rendement d'une telle installation n'est pas optimal. Pour répondre à ce problème, l'invention propose une installation de production d'électricité du type décrit précédemment, caractérisée en ce que l'air admis dans la tubulure d'alimentation cathodique est compressé successivement par deux compresseurs qui sont respectivement reliés à deux turbines qui sont agencées en série dans la tubulure d'évacuation cathodique.

Selon d'autres caractéristiques de l'invention :
- la conduite d'échappement du brûleur est reliée à la tubulure d'évacuation cathodique, en aval de moyens d'extraction d'eau qui sont interposés dans la tubulure d'évacuation cathodique ;
- l'installation de production d'électricité comporte des moyens d'extraction d'eau qui sont interposés dans la tubulure d'évacuation anodique en amont du brûleur ;
- l'installation de production d'électricité comporte une conduite de décharge d'une des turbines dont une extrémité amont est branchée sur la tubulure d'évacuation cathodique en aval de l'embranchement de la conduite d'échappement et en amont de la turbine, et dont une extrémité aval est branchée sur la conduite d'évacuation en aval de la turbine ;
- la conduite de décharge comporte des moyens de régulation de la quantité de gaz à détourner ;
- l'extrémité amont de la conduite de décharge est branchée sur la tubulure d'évacuation cathodique en aval de la turbine amont ;
- un dispositif de refroidissement de l'air est agencé dans la tubulure d'alimentation cathodique en aval du premier compresseur et en amont du second compresseur.

L'invention concerne aussi un véhicule automobile équipé d'une telle installation de production d'électricité, caractérisé en ce qu'il comporte un moteur électrique de traction qui est alimenté par l'installation de production d'électricité.

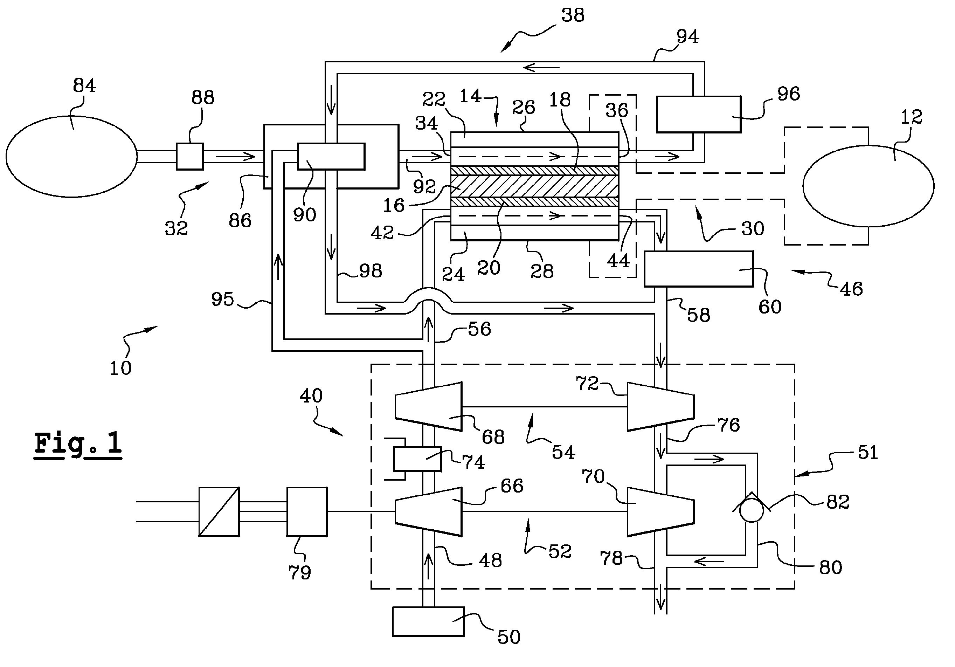

D'autres caractéristiques et avantages de l'invention apparaîtront au cours de la lecture de la description détaillée qui suit pour la compréhension de laquelle on se reportera au dessin annexé dont la figure unique représente schématiquement une installation de production d'électricité selon l'invention.

On a représenté sur le schéma une installation de production d'électricité 10 qui fournit ici de l'énergie à une chaîne de propulsion électrique 12 de véhicule automobile, par exemple à un moteur électrique de traction.

L'installation 10 comporte une pile à combustible 14 qui comporte un électrolyte 16 qui est ici une membrane en polymère 16. La membrane 16 sépare deux électrodes : une anode 18 et une cathode 20. L'ensemble est pris en sandwich entre deux plaques bipolaires 22, 24 dont les surfaces externes sont les bornes négative 26 et positive 28 de la pile 14. Un circuit électrique d'alimentation 30 du moteur électrique de traction 12 du véhicule est relié à chacune des bornes 26, 28.

L'anode 18 de la pile 14 est alimentée en combustible qui comporte notamment de l'hydrogène (H₂), par un circuit d'alimentation anodique 32 qui est connecté à une entrée anodique 34 de la pile 14. Le combustible circule entre la plaque bipolaire négative 22 et l'anode 18. Le surplus de combustible est évacué, sous forme de gaz d'évacuation anodique, par une sortie anodique 36 dans un circuit d'évacuation anodique 38.

De façon analogue, la cathode 20 de la pile 14 est alimentée en comburant, qui est ici de l'air atmosphérique, par un circuit d'alimentation cathodique 40 qui est connecté à une entrée cathodique 42 de la pile 14. Le comburant circule entre la plaque bipolaire positive 24 et la cathode 20. Le surplus de comburant est ensuite évacué par une sortie cathodique 44 dans un circuit d'évacuation cathodique 46.

Le circuit d'alimentation cathodique 40 comporte ici un tronçon d'admission d'air 48 dans lequel est agencé un filtre à air 50 qui est destiné à retenir les particules en suspensions dans l'air atmosphérique. Le tronçon d'admission d'air 48 débouche dans un module de compression de l'air 51 comprenant un premier étage de compression à basse pression 52 et un second étage de compression à haute pression 54. Une tubulure d'alimentation cathodique 56 conduit ensuite l'air ainsi comprimé jusqu'à l'entrée cathodique 42.

Le premier étage 52 comporte un compresseur amont à basse pression 66 qui est entraîné par une première turbine aval 70. Le second étage 54 comporte un compresseur aval à haute pression 68 qui est entraîné par une seconde turbine amont 72. Les compresseurs 66 et 68 sont agencés en série dans le circuit d'alimentation cathodique 40.

Le tronçon d'admission d'air 48 alimente le compresseur amont 66 du premier étage 52 qui précomprime l'air. L'air précomprimé est refroidi par un dispositif de refroidissement de l'air 74 qui est interposé entre la sortie du compresseur amont 66 et l'entrée du compresseur aval 68. Puis l'air ainsi refroidi est comprimé par le compresseur aval 68 du second étage 54 à la sortie duquel est connectée la tubulure d'alimentation cathodique 56.

Le circuit d'évacuation cathodique 46 comporte une tubulure d'évacuation des gaz cathodique 58 vers l'atmosphère. Un piège à eau cathodique 60 destiné à retenir l'eau présente dans les gaz évacués de la cathode 20 est intercalé dans la tubulure d'évacuation cathodique 58.

Les turbines amont 72 et aval 70 sont agencées en série dans la tubulure d'évacuation cathodique 58, en aval du piège à eau cathodique 60.

La tubulure d'évacuation cathodique 58 débouche dans la turbine amont 72 du second étage 54. Puis un tronçon intermédiaire 76 conduit les gaz jusqu'à la turbine aval 70 du premier étage 52 qui rejette les gaz détendus dans l'atmosphère par l'intermédiaire d'un tronçon de sortie 78.

Le premier étage 52 comporte aussi un moteur électrique auxiliaire 79 qui est destiné à entraîner mécaniquement le compresseur amont 66 lorsque le débit de gaz dans la turbine aval 70 est insuffisant, ou lorsque la température des gaz entrant dans turbine aval 70 est trop faible.

Une conduite de décharge 80 qui relie le tronçon intermédiaire 76 au tronçon de sortie 78, est destinée à détourner le gaz excédentaire de la turbine 70. La conduite de décharge 80 comporte une soupape de décharge 82 qui régule la quantité de gaz à détourner. Avantageusement, la soupape de décharge 82 comporte un clapet anti-retour (non représenté).

Le circuit d'alimentation anodique 32 comporte ici, et à titre non limitatif, un réservoir d'essence 84, qui alimente un reformeur 86 en essence comprimée par un dispositif de compression 88. Le reformeur 86 est destiné à décomposer l'essence pour en extraire de l'hydrogène (H₂) afin d'alimenter l'anode 18 de la pile 14. Le reformeur 86 peut extraire de l'hydrogène non seulement à partir d'essence, mais plus généralement à partir de certains hydrocarbures ou de certains alcools.

L'opération de reformage étant endothermique, le reformeur 86 comporte un brûleur 90 qui est destiné à maintenir le reformeur 86 à une température de fonctionnement. Le reformeur 86 comporte aussi des entrées d'admission d'air et d'eau (non représentées). Une conduite d'alimentation anodique 92 relie une sortie du reformeur 86 à l'entrée anodique 34 de la pile 14.

Les gaz d'évacuation anodique sont ensuite rejetés dans le circuit d'évacuation anodique 38 qui comporte une conduite d'évacuation anodique 94 qui s'étend à partir de la sortie anodique 36 jusqu'au brûleur 90.

Un piège à eau anodique 96 qui est destiné à extraire l'eau contenue dans les gaz d'évacuation anodique, est intercalé sur la conduite d'évacuation anodique 94. L'installation 10 nécessite en effet de l'eau pour pouvoir fonctionner correctement. Afin d'éviter un réapprovisionnement en eau trop fréquent du véhicule, il est avantageux de recycler au maximum l'eau présente à bord du véhicule. Or, après leur combustion dans le brûleur 90, la température des gaz d'évacuation anodique est trop élevée pour qu'on puisse en extraire l'eau par des moyens tels qu'un piège à eau. Le piège à eau anodique 96 est donc agencé en amont du brûleur 90.

Le brûleur 90 brûle ensuite les gaz d'évacuation qui sont rejetés après combustion sous forme de gaz d'échappement dans une conduite d'échappement 98. Afin de pouvoir effectuer l'opération de combustion, le brûleur 90 est aussi alimenté en air par l'intermédiaire d'une tubulure de répartition d'air 95 qui est raccordée par sa première extrémité à la tubulure d'alimentation cathodique 48 en aval du module de compression d'air 51, et par sa seconde extrémité au brûleur 90.

Selon les enseignements de l'invention, la conduite d'échappement 98 est branchée sur la tubulure d'évacuation cathodique 58, en aval du piège à eau cathodique 60 et en amont des turbines 70, 72. Les gaz d'échappement participent ainsi à l'alimentation des turbines amont 72 et aval 70 avant d'être rejetés dans l'atmosphère.

Nous allons à présent décrire le fonctionnement de l'installation 10. La pile 14 est tout d'abord alimentée en combustible et en comburant.

Dans le circuit d'alimentation anodique 32, l'essence est comprimée à une pression sensiblement équivalente à celle du comburant par le dispositif de compression 88, c'est-à-dire entre 4 et 4,5 bars, puis elle est conduite dans le reformeur 86. Le produit de l'opération de reformage est appelé « reformât ». Le reformât est constitué principalement d'hydrogène (H₂), de monoxyde de carbone (CO), de dioxyde de carbone (CO₂), d'azote (N₂) et d'eau (H₂O). Le reformât est le combustible qui alimente l'entrée anodique 34 par l'intermédiaire de la conduite d'alimentation anodique 92.

Dans le circuit d'alimentation cathodique 40, l'air atmosphérique est admis dans le tronçon d'entrée 48 en traversant le filtre à air 50. L'air est ensuite précomprimé, ici entre 2 et 2,5 bars, par le compresseur amont à basse pression 66. L'air précomprimé est ensuite refroidi par le dispositif de refroidissement 74 avant d'être comprimé, entre 4 et 4,5 bars, par le compresseur aval à haute pression 68. La compression de l'air est principalement pilotée en fonction de l'énergie électrique requise aux bornes 26 et 28 de la pile 14. L'air ainsi comprimé atteint ici une température d'environ 90 à 150°C. L'air est ensuite introduit à la cathode 20 par l'intermédiaire de la tubulure d'alimentation cathodique 56.

La pile 14 est ainsi alimentée en combustible et en comburant. Des réactions d'oxydation à l'anode 18 et de réduction à la cathode 20 permettent alors la production d'énergie électrique.

Lorsque le combustible est en contact avec l'anode 18, environ 70% à 95% de l'hydrogène (H₂) est oxydé. Le reste du combustible est rejeté sous forme de gaz d'évacuation anodique vers le brûleur 90 par l'intermédiaire de la conduite d'évacuation anodique 94. Une partie substantielle de l'eau contenue dans les gaz d'évacuation anodique est retenue par le piège à eau anodique 96.

Lors du contact de l'air avec la cathode 20, une portion de l'oxygène (O₂) contenu dans l'air est réduite en eau. Les surplus d'air et d'eau sont ensuite évacués par la sortie cathodique 44 jusqu'au piège à eau cathodique 60 dans la tubulure d'évacuation cathodique 58. Une partie substantielle de l'eau contenue dans les gaz d'évacuation cathodique est retenue par le piège à eau cathodique 60, puis recyclée pour le fonctionnement de l'installation.

Après réaction, les gaz sont ensuite traités et utilisés avant d'être rejetés dans l'atmosphère.

Les gaz d'évacuation de l'anode 18 comportent des substances polluantes et de l'hydrogène (H₂) qu'il faut brûler avant de rejeter dans l'atmosphère. Cette opération est réalisée dans le brûleur 90. Les gaz d'échappement du brûleur 90 comportent principalement du dioxyde de carbone (CO₂), de l'eau (H₂O), de l'oxygène (O₂) et de l'azote (N₂). lls sont rejetés dans la conduite d'échappement 98, puis dans la tubulure d'évacuation cathodique 58.

Les gaz d'échappement et les gaz d'évacuation cathodiques alimentent ensuite les deux turbines amont 72 et aval 70 des second 54 et premier 52 étages de compression avant d'être rejetés dans l'atmosphère.

Le raccordement de la conduite d'échappement 98 sur la tubulure d'évacuation cathodique 58 permet avantageusement d'utiliser le débit des gaz d'échappement en plus du débit des gaz d'évacuation cathodique pour comprimer l'air en aval de l'entrée cathodique 42. Ainsi, l'énergie apportée par les gaz d'échappement n'est plus à fournir par le moteur électrique auxiliaire 79 qui consomme donc moins d'électricité.

La différence de pression entre l'anode 18 et la cathode 20 doit être inférieure un seuil, par exemple 0,5 bar, au-dessus duquel la pile 14 risque d'être endommagée, notamment par la détérioration de la membrane en polymère 16. Le raccordement du circuit d'évacuation anodique 38 sur le circuit d'évacuation cathodique 46 permet d'équilibrer sensiblement les différences de pression, notamment dues aux pertes de charge, entre le combustible à l'anode 18 et le comburant à la cathode 20.

## Revendications

1. Installation de production d'électricité (10) pour fournir de l'énergie à un véhicule automobile, comportant une pile à combustible (14), notamment à électrolyte polymère (16), et un reformeur (86) comprenant un brûleur (90), qui alimente une entrée anodique (34) de la pile (14) avec un reformât contenant du combustible, notamment de l'hydrogène (H₂), qui est partiellement consommé par la pile (14), le surplus de reformât étant conduit depuis une sortie anodique (36) de la pile (14) jusqu'à une entrée d'alimentation du brûleur (90) qui effectue la combustion du surplus de reformât et l'expulse, sous forme de gaz d'échappement, dans une conduite d'échappement (98), et du type dans laquelle une tubulure d'alimentation cathodique (56) alimente une entrée cathodique (42) de la pile (14) en comburant, notamment en air, compressé par au moins un compresseur (66, 68), et dans laquelle une sortie cathodique (44) de la pile (14) évacue le surplus de comburant dans une tubulure d'évacuation cathodique (58) dans laquelle est agencée au moins une turbine (70, 72) qui est reliée mécaniquement au compresseur (66, 68), la conduite d'échappement (98) du brûleur (90) étant reliée à la tubulure d'évacuation cathodique (58) dans laquelle elle débouche en amont de la turbine (70, 72),
**caractérisée en ce que** l'air admis dans la tubulure d'alimentation cathodique (56) est compressé successivement par deux compresseurs (66, 68) qui sont respectivement reliés à deux turbines (70, 72) qui sont agencées en série dans la tubulure d'évacuation cathodique (58).

2. Installation de production d'électricité (10) selon la revendication précédente, **caractérisée en ce que** la conduite d'échappement (98) du brûleur (90) est reliée à la tubulure d'évacuation cathodique (58), en aval de moyens d'extraction d'eau (60) qui sont interposés dans la tubulure d'évacuation cathodique (58).

3. Installation de production d'électricité (10) selon la revendication précédente, **caractérisée en ce qu'**elle comporte des moyens d'extraction d'eau (96) qui sont interposés dans la tubulure d'évacuation anodique (98) en amont du brûleur (90).

4. Installation de production d'électricité (10) selon l'une quelconque des revendications précédentes, **caractérisée en ce qu'**elle comporte une conduite de décharge (80) d'une des turbines (70) dont une extrémité amont est branchée sur la tubulure d'évacuation cathodique (76) en aval de l'embranchement de la conduite d'échappement (98) et en amont de la turbine (70), et dont une extrémité aval est branchée sur la conduite d'évacuation (78) en aval de la turbine (70).

5. Installation de production d'électricité (10) selon la revendication précédente, **caractérisée en ce que** la conduite de décharge (80) comporte des moyens (82) de régulation de la quantité de gaz à détourner.

6. Installation de production d'électricité (10) selon l'une quelconque des revendications 4 ou 5, **caractérisée en ce que** l'extrémité amont de la conduite de décharge (80) est branchée sur la tubulure d'évacuation cathodique (76) en aval de la turbine amont (72).

7. Installation de production d'électricité (10) selon l'une quelconque des revendications précédentes, **caractérisée en ce qu'**un dispositif de refroidissement de l'air (74) est agencé dans la tubulure d'alimentation cathodique (56) en aval du premier compresseur (66) et en amont du second compresseur (68).

8. Véhicule automobile équipé d'une installation de production d'électricité (10) selon l'une quelconque des revendications 1 à 7, **caractérisé en ce qu'**il comporte un moteur électrique de traction (12) qui est alimenté par l'installation de production d'électricité (10).
